# EUROPÄISCHE PATENTSCHRIFT

(11) **EP 1 461 989 B1**
(45) Veröffentlichungstag und Bekanntmachung des Hinweises auf die Patenterteilung: **20.05.2015**
(21) Anmeldenummer: 04006645.8
(22) Anmeldetag: 19.03.2004
(51) Int. Cl.: A01C 7/04

(54) **Pneumatische Sämaschine, insbesondere Einzelkornsämaschine**
Pneumatic sowing machine, in particular single-grain sowing machine
Semoir pneumatique, particulièrement semoir monograine

(30) Priorität: 25.03.2003 DE 10313180
(43) Veröffentlichungstag der Anmeldung: 29.09.2004
(73) Patentinhaber: Amazonen-Werke H. Dreyer GmbH & Co. KG, 49205 Hasbergen (DE)
(72) Erfinder: Johannaber, Stefan, 49536 Lienen (DE); Hörnschemeyer, Hubert, 49134 Wallenhorst (DE)

(56) Entgegenhaltungen:
- EP-A- 0 041 461
- DE-A- 4 419 964
- DE-A- 19 614 348
- US-A1- 2002 100 400
- US-A1- 2002 144 637

## Beschreibung

Die Erfindung betrifft eine pneumatische Sämaschine, insbesondere Einzelkornsämaschine, gemäß des Oberbegriffes des Patentanspruches 1.

Eine derartige Sämaschine ist beispielsweise in den europäischen Patentschriften 00 38 241 und 04 04 241 B1 beschrieben. Bei diesen Sämaschinen wird das Saatgut mittels einer Verteil- und/oder Vereinzelungseinrichtung vereinzelt und dosiert in pneumatische Förderleitungen eingeleitet. In dieser Förderleitungen wird das Saatgut von dem Luftstrom mitgerissen und mit hoher Geschwindigkeit bewegt, auf Geschwindigkeiten bis zu 60 km/h und mehr beschleunigt und jeweils einen Saatgutauslass aufweisenden Saatgutführungskanal zugeleitet. Der Saatgutführungskanal im Säschar weist eine nach hinten- unten weisende Krümmung auf. Der Saatgutführungskanal im Säschar ist im unteren Bereich nach hinten geöffnet. Dem Säschar ist eine Saatgutandruck- und Fangrolle zugeordnet. In Richtung dieser Rolle ist der Saatgutführungskanal geöffnet, so dass hierdurch Luft entweichen kann. Die Umfangsfläche der dem Säschar zugeordnete Rolle ist sehr dicht an den geöffneten Saatgutführungskanal herangeführt, so dass nur wenig Luft in diesem Bereich entweichen kann und die überwiegende Luft am Ende des Saatgutführungskanals im Abgabebereich des Saatgutes bzw. im Übergabebereich des Saatgutes von dem Führungskanal in die von dem Säschar geschaffene Furche entweichen muss.

Hierbei wird die Luft mit dem Saatgut umgelenkt, es entstehen sehr viele Luftwirbel, so dass eine saubere Führung des Saatgutes im Krümmungsbereich kurz vor der Ablage des Saatgutes im Boden nicht mehr gegeben ist. Durch die in Richtung des Einbettungsbereiches des Saatgutes in die Säfurche geblasene Luft wird die Ablage des Saatgutes negativ beeinflusst.

Der Erfindung liegt die Aufgabe zugrunde, mit einfachen Mitteln eine störungsfreie Saatgutführung im Saatgutführungskanal bis zur Übergabe in die Saatfurche und/oder Einbettung des Saatgutes in der Säfurche unter Vermeidung der vorstehenden Nachteile zu erreichen.

Diese Aufgabe wird erfindungsgemäß dadurch gelöst, dass zumindest eine Luftauslassöffnung auf der Krümmungsaußenseite des Saatgutführungskanals angeordnet ist. Der Grundgedanke besteht darin, die Luft aus dem Saatgutführungskanal vor der Saatablage so entweichen zu lassen, dass zumindest im letzten Bereich des Saatgutführungskanals die Förderluft die Ablage des Saatgutes möglichst nicht oder wenig beeinflusst. Hierdurch wird gewährleistet, dass die Förderluft im wesentlichen in Richtung ihrer normalen Bewegungsrichtung entweichen kann. Die Förderluft wird daher im wesentlichen nicht mit dem Saatgut umgelenkt. Es wird lediglich das Saatgutkorn umgelenkt und in Richtung des Saatgutablagebereiches in die Säfurche geschleudert und kann dann von der Saatandruckrolle angedrückt werden, so dass eine gleichmäßige Ablage des Saatgutes in bisher nicht erreichter einfacher Weise erreicht.

Eine einfache Ausgestaltung des Saatgutführungskanals mit der Möglichkeit, die Luft in Richtung ihrer normalen Bewegungsrichtung entweichen zu lassen, lässt sich dadurch erreichen, dass der Saatgutführungskanal, eine gekrümmte Saatgutführungsbahn aufweist, dass beidseitig der Saatgutführungsbahn als Schlitze ausgebildete Luftauslassöffnungen zur Entweichung der Druckluft in Richtung der Krümmungsaußenseite angeordnet sind. Die Schlitze können sich hierbei zwischen der Saatgutführungsbahn und den Seitenflächen des Saatgutführungskanals befinden

Um eine gute Saatgutführung im Krümmungsbereich zu erreichen, ist vorgesehen, dass der Saatgutführungskanal auf seiner Krümmungsinnenseite geschlossen ausgebildet ist. An der Führungsbahn schließen sich unmittelbar Luftauslassöffnungen zum Entweichen der Luft an.

Um eine weitere Verbesserung des Entweichens der Luft zu ermöglichen, ist vorgesehen, dass in den Seitenflächen des Saatgutführungskanals Luftauslassöffnungen angeordnet sind.

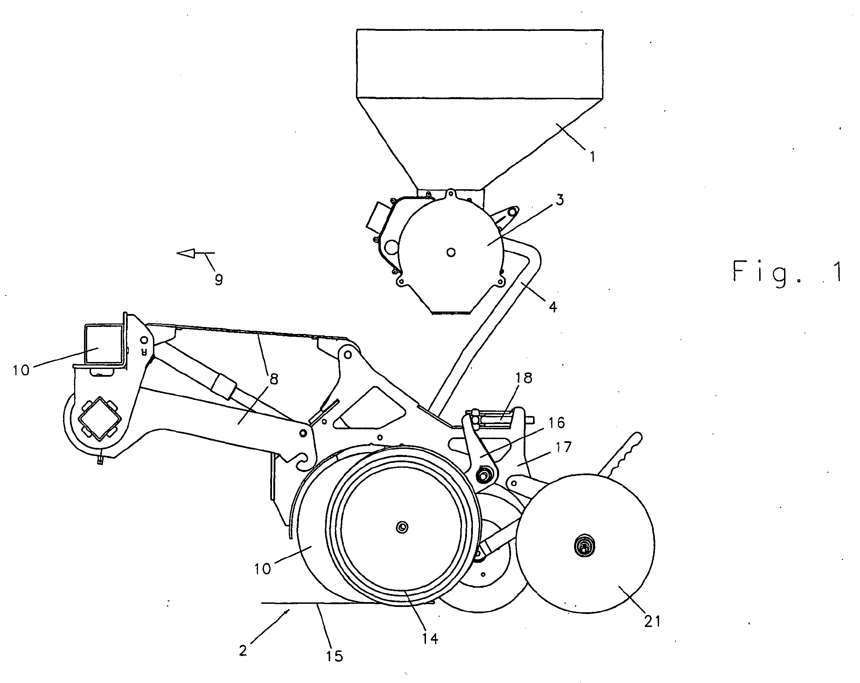

Weitere Einzelheiten der Erfindung sind der Beispielsbeschreibung und den Zeichnungen zu entnehmen. Hierbei zeigen
- Fig. 1: die als Einzelkornsämaschine ausgebildete Sämaschine in Prinzipdarstellung, in Seitenansicht, wobei lediglich der Vorratsbehälter mit der Verteileinrichtung und einem Säschar dargestellt ist,

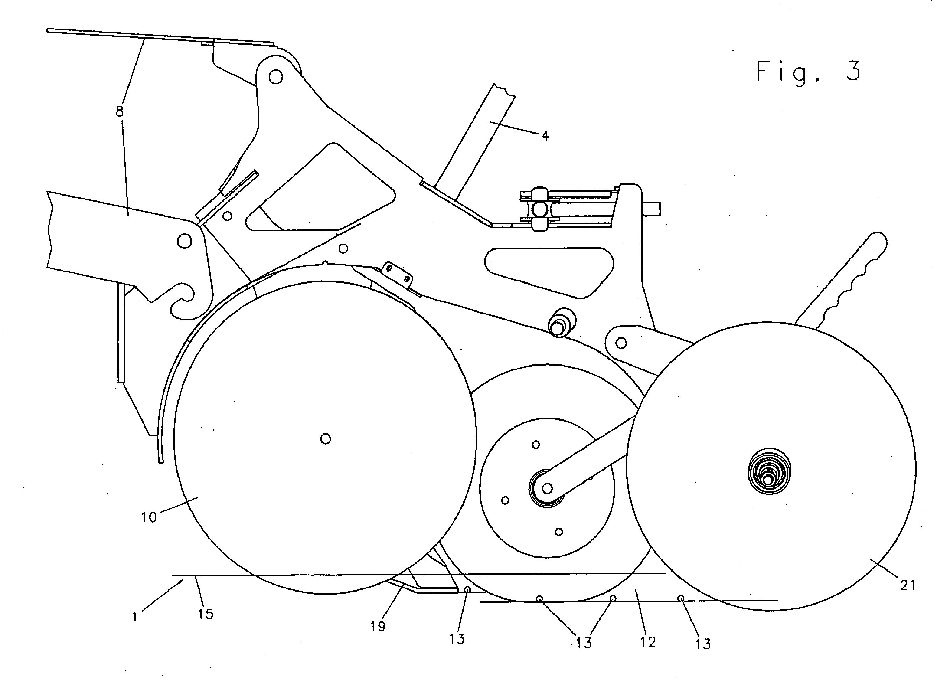

- Fig. 2: die Schareinheit der Sämaschine in Seitenansicht und vergrößertem Maßstab,

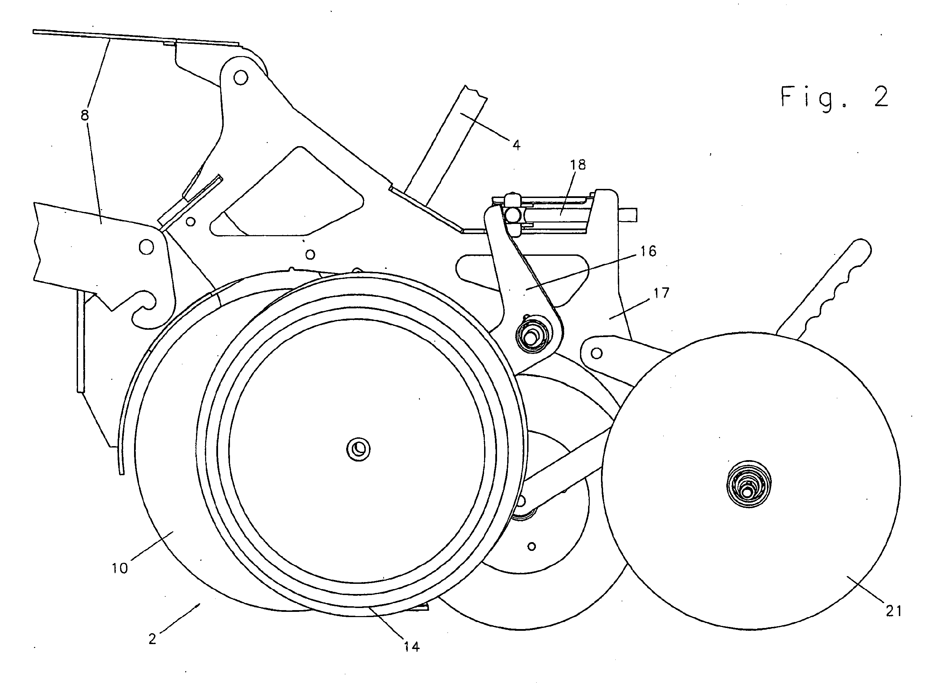

- Fig. 3: die Schareinheit in Seitenansicht und abgenommenem Furchenrad,

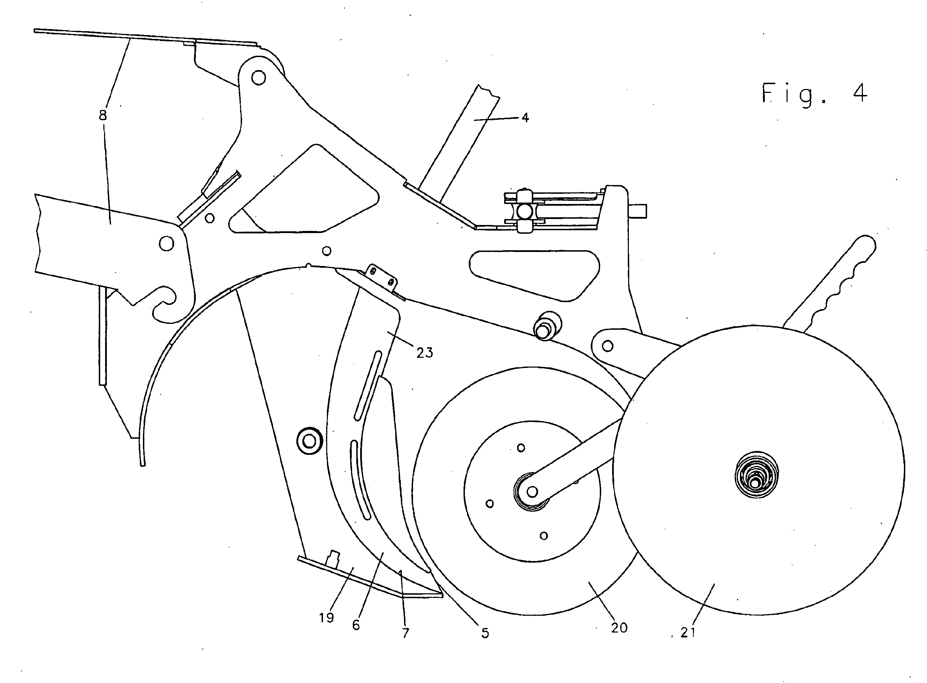

- Fig. 4: die Schareinheit in Seitenansicht mit abgenommenen Furchenrädern und Scharscheiben,

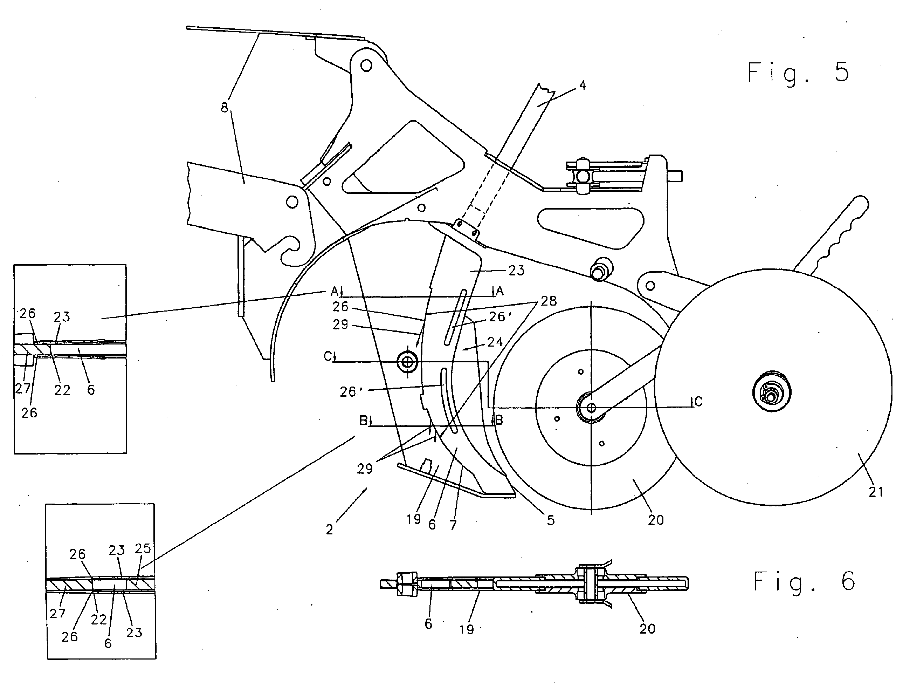

- Fig. 5: die Schareinheit gemäß Fig. 4, jedoch in verkleinertem Maßstab und mit vergrößerten Darstellungen der Schnitte A-A und B-B und
- Fig. 6: die Schareinheit in der Ansicht C-C.

Die pneumatische Sämaschine ist als Einzelkornsämaschine ausgebildet. Die Sämaschine weist den Vorratsbehälter 1 und für jedes Säschar 2 ein Vereinzelungsorgan 3 auf. Von jedem Vereinzelungsorgan führt eine Druckluft beaufschlagte Förderleitung 4 von der Verteil- und Vereinzelungseinrichtung 3 zu einem ein Saatgutauslass 5 aufweisenden Zuführungskanal 6 eines Säschares 2. Der Saatgutzuführungskanal 6 weist eine nach hinten-unten weisende Krümmung 7 auf. Das Säschar 2 ist mittels einer vorzugsweise parallelogrammartigen Halterung 8 an einem quer zur Fahrtrichtung 9 verlaufenden Querträger 10 angeordnet. Nebeneinander sind mehrere derartige Säschare 2 beabstandet zueinander vorgesehen. Jedem Säschar 2 ist eine vorgeschriebene Förderleitung mit Vereinzelungseinrichtung 3 zugeordnet. Im Ausführungsbeispiel ist das Säschar 2 als Doppelscheibenschar ausgebildet und weist die beiden Scharscheiben 11 auf, die in Draufsicht gesehen V-förmig zueinander angestellt sind und zur Schaffung einer Säfurche 12 ausgebildet sind. Diese Säschare 2 schaffen eine Säfurche, in welcher in nachbeschriebener Weise das vereinzelte Saatgut 13 abgelegt wird. Neben den Scheiben 11 sind die Furchenräder 14, die die Eindringtiefe der Scharscheiben 11 in den Boden 15 bestimmen, angeordnet. Diese Furchenräder 14 sind in bekannter Weise am Schwingen 16 am Scharrahmen 17 angelenkt und gegenüber den Scharscheiben mittels einer Einstelleinrichtung 18 einstellbar. Zwischen den Scharscheiben ist das zusammen mit den Scharscheiben 11 die Säfurche 12 ausgebildete Scharkufe 19 angeordnet. Hinter dieser Scharkufe 19 befindet sich eine Saatandruckrolle 20 und die Furchenandruckrollen 21.

Die als Scharkörper ausgebildete Scharkufe 19, welches zwischen den Scheiben 11 angeordnet ist, weist, wie vor erwähnt, den Saatgutführungskanal 6 mit einer nach hinten-unten aufweisenden Krümmung 7 auf. Dieser Saatgutführungskanal 6 besteht aus der gekrümmten Saatführungsbahn 22, dem beidseitig der Saatgutführungsbahn 22 angeordneten und die Seitenflächen des Kanals 6 bildenden Seitenelementen 23 und in den Saatgutkrümmungskanal 6 auf seiner Krümmungsinnenseite 24 abschließenden hinteren Kanalelement 25. Der Saatgutführungskanal 6 weist mehrere Luftauslassöffnungen 26 zum Entweichen der Förderdruckluft auf. Auf jeder Seite der Saatgutführungsbahn 22 ist zwischen den die Saatgutführungsbahn 22 bildende Element 27 und den Seitenflächen 23 auf der Krümmungsaußenseite 28 jeweils zumindest eine Luftauslassöffnung 26 angeordnet. Diese Luftauslassöffnungen 26 sind als Schlitze zur Entweichung der Druckluft in Richtung der Krümmungsaußenseite 28 ausgestaltet. Des weiteren sind in den Seitenflächen 23 des Saatgutführungskanals 6 zusätzliche Luftauslassöffnungen 26' zugeordnet. Die Luftauslassöffnungen 26 sind zwischen der Saatgutführungsbahn 22 und den Seitenflächen 23 so angeordnet, dass die Luft in ihrer Strömungsrichtung 29 entweichen kann, d.h. also, dass der wesentliche Druckluftanteil, der zur Förderung des Saatgutes 13 von der Vereinzelungs- und Verteileinrichtung 3 zu der Saatgutauslassöffnung 5 benötigt wird, in seiner normalen Strömungsrichtung 29 entweichen kann, ohne dass er im Gegensatz zu dem Saatgut 13 von der gekrümmten Saatgutführungsbahn 22 umgelenkt wird. Der wesentliche Teil der Förderluft entweicht durch die Schlitze 26 nach vorne, wie die Pfeile 29 zeigen. Der weitere Teil entweicht durch die in den Seitenflächen 23 angeordneten Luftauslassöffnungen 26 und der Rest der von der Saatgutführungsbahn mit umgelenkten Luft wird, im Bereich des Saatgutauslasses 5.

Somit beeinflusst die Förderluft die Ablage des Saatgutes 13 möglichst nicht oder nur wenig. Aufgrund der kinetischen Energie gleitet das Saatkorn 13 an der gekrümmten Saatgutführungsbahn 22 entlang und wird in Richtung des von den Saatandruckrolle 20 und der Säfurche 12 gebildeten Keil geschleudert und von der Säfurche 12 und von der Saatandruckrolle 20 abgefangen und in den Boden der Säfurche 12 gedrückt.

## Patentansprüche

1. Pneumatische Sämaschine, insbesondere Einzelkornsämaschine mit druckluftbeaufschlagten Saatgutleitungen, die jeweils von einer Verteileinrichtung zu einem einen Saatgutauslass aufweisenden Saatgutführungskanal eines Säschares führen, wobei der Saatgutführungskanal im Säschar eine nach hinten - unten weisende Krümmung, sowie Luftauslassöffnungen zum Entweichen der Druckluft aufweist, **dadurch gekennzeichnet, dass** zumindest eine Luftauslassöffnung (26) auf der Krümmungsaußenseite (28) des Saatgutführungskanals (6) angeordnet ist.

2. Sämaschine nach Anspruch 1, **dadurch gekennzeichnet, dass** der Saatgutführungskanal (6) eine gekrümmte Saatgutführungsbahn (22) aufweist, dass beidseitig der Saatgutführungsbahn als Schlitze ausgebildete Luftauslassöffnungen zur Entweichung der Druckluft in Richtung der Krümmungsaußenseite (28) angeordnet sind.

3. Sämaschine nach Anspruch 1, **dadurch gekennzeichnet, dass** der Saatgutführungskanal auf seiner Krümmungsinnenseite (24) geschlossen ausgebildet ist.

4. Sämaschine nach einem oder mehreren der vorstehenden Ansprüche, **dadurch gekennzeichnet, dass** in den Seitenflächen (23) des Saatgutführungskanals (6) Luftauslassöffnungen (26') angeordnet sind.

## Claims

1. Pneumatic sowing machine, in particular single-grain sowing machine, with seed lines which are pressurized by compressed air and each lead from a distributing device to a seed guiding channel of a coulter, which seed guiding channel has a seed outlet, wherein the seed guiding channel has a rearwardly and downwardly pointing curvature in the coulter, and also air outlet openings for the escape of the compressed air, **characterized in that** at least one air outlet opening (26) is arranged on the outer side (28) of the curvature of the seed guiding channel (6).

2. Sowing machine according to Claim 1, **characterized in that** the seed guiding channel (6) has a curved seed guiding track (22), **in that** air outlet openings designed as slots are arranged on both sides of the seed guiding track for the escape of the compressed air in the direction of the outer side (28) of the curvature.

3. Sowing machine according to Claim 1, **characterized in that** the seed guiding channel is of closed design on the inner side (24) of the curvature thereof.

4. Sowing machine according to one or more of the preceding claims, **characterized in that** air outlet openings (26') are arranged in the side surfaces (23) of the seed guiding channel (6).

## Revendications

1. Semoir pneumatique, en particulier semoir monograine comprenant des conduites de semences sollicitées par de l'air comprimé, lesquelles mènent respectivement d'un dispositif de distribution à un canal de guidage de semences, comprenant une sortie de semences, d'un soc de semoir, le canal de guidage de semences dans le soc de semoir présentant une courbure orientée vers l'arrière et vers le bas, ainsi que des ouvertures de sortie d'air pour l'échappement de l'air comprimé, **caractérisé en ce qu'**au moins une ouverture de sortie d'air (26) est disposée sur le côté extérieur de courbure (28) du canal de guidage de semences (6).

2. Semoir selon la revendication 1, **caractérisé en ce que** le canal de guidage de semences (6) comprend une voie de guidage de semences courbée (22), et **en ce que**, des deux côtés de la voie de guidage de semences, des ouvertures de sortie d'air réalisées sous forme de fentes sont disposées pour l'échappement de l'air comprimé dans la direction du côté extérieur de courbure (28).

3. Semoir selon la revendication 1, **caractérisé en ce que** le canal de guidage de semences est réalisé de manière fermée sur son côté intérieur de courbure (24).

4. Semoir selon l'une quelconque ou plusieurs des revendications précédentes, **caractérisé en ce que** des ouvertures de sortie d'air (26') sont disposées dans les surfaces latérales (23) du canal de guidage de semences (6).
